# EUROPEAN PATENT APPLICATION

(11) **EP 4 632 993 A1**
(43) Date of publication of application: **15.10.2025**
(21) Application number: 24169403.3
(22) Date of filing: 10.04.2024
(51) Int. Cl.: H02J 7/00, H02J 9/06, H05B 47/20

(54) **EMERGENCY LIGHTING SYSTEM AND METHOD FOR MONITORING A HEALTH OF A BATTERY OF AT LEAST ONE EMERGENCY LUMINAIRE**

(71) Applicant: Tridonic GmbH & Co. KG, 6851 Dornbirn (AT)
(72) Inventor: Santiago, Alekssander, 6851 Dornbirn (AT)
(74) Representative: Rupp, Christian

(57) **Abstract**

The invention relates to an emergency lighting system (10) which comprises: at least one emergency luminaire (21) which is equipped with a battery (12); and a supply switching circuit (17) which is arranged to electrically connect the at least one emergency luminaire (21) to an electrical supply line (20a); wherein the emergency lighting system (10) is configured to periodically perform an emergency lighting test, during which the supply switching circuit is configured to: disconnect the at least one emergency luminaire from the electrical supply line to power the emergency luminaire from its battery (12) until the battery (12) is fully discharged, and subsequently connect the at least one emergency luminaire to the electrical supply line (20a) to fully charge its battery (12) from the electrical supply line (20a). The emergency lighting system (10) further comprises: a measurement unit (20) configured to measure an amount of electrical energy required to fully charge the battery (12) of the at least one emergency luminaire (21) during the emergency lighting test; and a controller (13) configured to compare the measured amount of electrical energy to at least one stored value of the amount of electrical energy measured during at least one previous emergency lighting test; wherein the controller (13) is configured to issue a warning if the difference between the measured amount and the stored value exceeds a threshold value.

## Description

### TECHNICAL FIELD OF THE INVENTION

The invention relates to an emergency lighting system comprising at least one emergency luminaire which is equipped with a battery, and to a method for monitoring a health of a battery of at least one emergency luminaire.

### BACKGROUND OF THE INVENTION

Emergency lighting systems are mandatory in public buildings and workplaces and ensure that a building can be evacuated safely in an emergency. Such systems can comprise emergency lighting and escape route luminaires, which provide sufficient light to e.g. switch off machines, utilize escape routes and enable quick access to fire extinguishers and other safety equipment. The emergency lighting system typically comprise batteries to supply the emergency lighting, e.g., in case of a mains failure.

Such emergency lighting systems undergo periodic tests. To this purpose, the emergency lighting is activated, and it is monitored whether the system, fed by the battery, can operate the emergency lighting according to prescribed regulatory requirements. However, these tests do usually not provide information about the health or status of the battery. As batteries degrade over time, it would be advantageous to know if the battery capacity has significantly decreased.

In conventional systems, the battery capacity can be estimated "manually" by triggering an emergency function and monitoring visually how long the emergency lighting remains ON. In this way, a user can verify whether the battery holding capacity is sufficient or not. This is however a lengthy and expensive task for a building maintenance.

### SUMMARY OF THE INVENTION

Thus, it is an objective of the invention to provide an improved emergency lighting system and an improvised method for monitoring a health of a battery of at least one emergency luminaire, which avoid the above-mentioned disadvantages.

The object of the present invention is achieved by the solution provided in the enclosed independent claims. Advantageous implementations of the present invention are further defined in the dependent claims.

According to a first aspect, the invention relates to an emergency lighting system, comprising: at least one emergency luminaire which is equipped with a battery; and a supply switching circuit which is arranged to electrically connect the at least one emergency luminaire to an electrical supply line; wherein the emergency lighting system is configured to periodically perform an emergency lighting test, during which the supply switching circuit is configured to: disconnect the at least one emergency luminaire from the electrical supply line to power the emergency luminaire from its battery until the battery is fully discharged, and subsequently connect the at least one emergency luminaire to the electrical supply line to fully charge its battery from the electrical supply line. The emergency lighting system further comprises: a measurement unit configured to measure an amount of electrical energy required to fully charge the battery of the at least one emergency luminaire during the emergency lighting test; and a controller configured to compare the measured amount of electrical energy to at least one stored value of the amount of electrical energy measured during at least one previous emergency lighting test; wherein the controller is configured to issue a warning if the difference between the measured amount and the stored value exceeds a threshold value.

This achieves the advantage that the health of emergency luminaire batteries can be monitored every time the emergency lighting test is carried out. For instance, the amount of energy that is provided to the battery during charging (i.e., after completely discharging the battery) corresponds to the capacity of the battery. By comparing this value to previously measured values, it can be detected if the battery capacity has degraded significantly since the last test(s). In case a significant degrading of the battery health is detected, the system can issue the warning to, e.g., prompt a user to replace the battery.

Furthermore, this allows to reduce the testing cost and time of the system, by informing the user if the battery capacity has changed over time and confirm the need for tests.

The system can supply one or more emergency luminaires. In case of a plurality of emergency luminaires, each emergency luminaire can be equipped with a respective battery. In this case, the batteries are preferably not measured individually; rather, all batteries are discharged in parallel during the testing and the energy required to charge all batteries is measured by the measurement unit and compared to at least one stored value. If it is detected that this value has degraded, the luminaires respectively their batteries can be checked individually.

In particular, the measurement unit is configured to measure the amount of electrical energy required to fully (re)charge the battery (or batteries) during each emergency lighting test and store the respective amount after each test. The power measurement unit can comprise a power metering circuit.

The controller can be configured to compare the measured value to the stored value(s) after each emergency lighting test that is carried out by the system.

The controller can be configured to control the supply switching circuit to perform the emergency lighting test. For instance, the controller is a microprocessor or an ASIC.

The supply switching circuit can comprise one or more switches, e.g. semiconductor switches and/or electromechanical switches.

The electrical supply line can be a mains supply line. The electrical supply line could also be a DC bus line.

The at least one emergency luminaire can comprise LED luminaires. The emergency luminaire can comprise emergency lighting and escape route luminaires. The at least one emergency luminaire can further comprise a diver, e.g. an LED driver for the LED luminaires.

The warning can be issued in the form of a warning signal, e.g. a warning message, warning sound or warning light.

In an embodiment, the battery is an internal battery of the at least one emergency luminaire.

For example, the battery can be arranged in a housing of the emergency luminaire. In case of a plurality of emergency luminaires, each luminaire can comprise a respective battery.

In an embodiment, the system further comprises: input terminals arranged for electrically connecting to the electrical supply line; and output terminals arranged for electrically connecting the at least one emergency luminaire; wherein the supply switching circuit is switched between the input terminals and the output terminals.

In an embodiment, the measurement unit is electrically connected to the electrical supply line and is configured to measure the amount of electrical energy which is supplied to the at least one emergency lighting luminaire while charging the battery. For instance, it can be estimated that this energy corresponds to the energy required to charge the batteries.

In an embodiment, the emergency lighting system comprises a memory configured to store the measured amount of electrical energy after each emergency lighting test. This provides the advantage that the health of the battery can be tracked over time.

For instance, the controller is configured to store the measured amount of electrical energy in the memory after each emergency lighting test.

In an embodiment, the emergency lighting system further comprises a display unit and/or an optical element configured to display a warning message and/or a warning light if the difference between the measured amount and the stored value exceeds the threshold value. This provides the advantage that a user or operator of the system can be informed in case the battery health has significantly degraded.

For instance, the controller is configured to control the display unit and/or the optical element to display the warning message and/or warning light if it detects that the difference between the measured amount and the stored value exceeds the threshold value.

In an embodiment, the emergency lighting system further comprises an acoustic signaling device configured to play a warning sound if the difference between the measured amount and the stored value exceeds the threshold value. This provides the advantage that a user or operator of the system can be informed in case the battery health has significantly degraded.

For instance, the controller is configured to control the acoustic signaling device to play the warning sound if it detects that the difference between the measured amount and the stored value exceeds the threshold value. The acoustic signaling device can be a loudspeaker.

In an embodiment, the emergency lighting system further comprises a communication interface configured to forward a warning message if the difference between the measured amount and the stored value exceeds the threshold value. This provides the advantage that a user or operator of the system can be informed in case the battery health has significantly degraded.

For instance, the controller is configured to forward the warning message via the communication interface if it detects that the difference between the measured amount and the stored value exceeds the threshold value.

In an embodiment, the communication interface comprises at least one of the following interfaces: a DALI interface, a serial interface, a Bluetooth interface, a Wi-Fi interface, an NFC interface, a Thread interface, and a cellular network interface.

According to a second aspect, the invention relates to a method for monitoring a health of a battery of at least one emergency luminaire, the method comprising: periodically performing an emergency lighting test, during which: the at least one emergency luminaire is disconnected from an electrical supply line and powered from its battery until the battery is fully discharged, and the at least one emergency luminaire is subsequently connected to the electrical supply line to fully charge its battery from the electrical supply line. The method further comprises: measuring an amount of electrical energy required to fully charge the battery of the at least one emergency luminaire during the emergency lighting test; comparing the measured amount of electrical energy to at least one stored value of the amount of electrical energy measured during at least one previous emergency lighting test; and issuing a warning if the difference between the measured amount and the stored value exceeds a threshold value.

The at least one emergency luminaire can be connected to the electrical supply line via a supply switching circuit. The supply switching circuit can selectively connect or disconnect the at least one emergency luminaire from the electrical supply line.

In an embodiment, the method further comprises: storing the measured amount of electrical energy in a memory after each emergency lighting test.

In an embodiment, the step of issuing the warning comprises: displaying a warning message and/or a warning light if the difference between the measured amount and the stored value exceeds the threshold value.

In an embodiment, the step of issuing the warning comprises: playing a warning sound if the difference between the measured amount and the stored value exceeds the threshold value.

In an embodiment, the step of issuing the warning comprises: forwarding a warning message via a communication interface if the difference between the measured amount and the stored value exceeds the threshold value.

The method according to the second aspect of the invention can be carried out by the emergency lighting system according to the first aspect of the invention.

### BRIEF DESCRIPTION OF THE DRAWINGS

The invention will be explained in the followings together with the figures.
- Fig. 1: shows a schematic diagram of an emergency lighting system according to an embodiment;
- Fig. 2A: shows a schematic diagram of an emergency lighting system according to an embodiment;
- Fig. 2B: shows a schematic diagram of an emergency lighting system according to an embodiment;
- Figs. 3A-B: show exemplary rest mode signals according to an embodiment;
- Fig. 4: shows charging curves of a battery of an emergency lighting system according to an embodiment; and
- Fig. 5: shows a flow diagram of a method for monitoring a health of a battery of at least one emergency lighting system according to an embodiment.

### DETAILED DESCRIPTION OF THE PREFERRED EMBODIMENTS

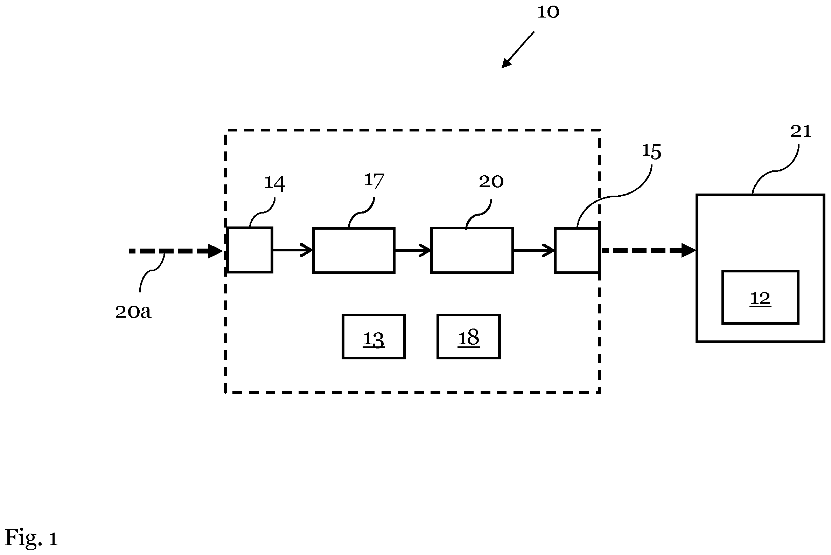

Fig. 1 shows a schematic diagram of an emergency lighting system 10 according to an embodiment.

The emergency lighting system 10 comprises: at least one emergency luminaire 21 which is equipped with a battery; and a supply switching circuit 17 which is arranged to electrically connect the at least one emergency luminaire 21 to an electrical supply line 20a; wherein the emergency lighting system 10 is configured to periodically perform an emergency lighting test, during which the supply switching circuit is configured to: disconnect the at least one emergency luminaire from the electrical supply line to power the at least one emergency luminaire from its battery 12 until the battery 12 is fully discharged, and subsequently connect the at least one emergency luminaire to the electrical supply line 20a to fully charge the battery 12 from the electrical supply line 20a.

The emergency lighting system 10 further comprises: a measurement unit 20 configured to measure an amount of electrical energy required to fully charge the battery 12 of the at least one emergency luminaire 21 during the emergency lighting test; and a controller 13 configured to compare the measured amount of electrical energy to at least one stored value of the amount of electrical energy measured during at least one previous emergency lighting test; herein the controller 13 is configured to issue a warning if the difference between the measured amount and the stored value exceeds a threshold value.

For instance, the battery 12 is an EM (emergency lighting) battery of the emergency luminaire 21 which is configured to power the luminaire 21 in case of a mains failure. Disconnecting the luminaire 21 from the supply line 20a during the testing simulates such a mains failure and, thus, prompts the battery 12 to supply the emergency luminaire 21 with its stored electrical energy. This battery supply (i.e., the disconnection of the luminaire from the supply line) is maintained until the battery 12 is fully discharged. Subsequently, the luminaire 21 is (re)connected to the supply line 20a at least until the battery 12 is fully recharged (e.g., via a battery charger in the luminaire that receives electrical power forwarded from the supply line 20a).

Preferably, the battery 12 is an internal battery of the luminaire 21 which is, e.g., arranged in a housing of the luminaire. However, the battery could also be an external battery which is electrically connected to the luminaire 21 (e.g., in the manner of a central battery).

By measuring the energy required to fully (re)charge the battery 12 (or batteries), the system 10 can gain additional information as to the current status of the battery 12. For instance, the system 10 can be configured to measure the amount of electrical energy required to fully charge the battery each time the emergency lighting test is carried out.

For instance, the amount of energy that is provided to the battery 12 during charging (i.e., after completely discharging the battery) corresponds to the capacity of the battery 12. By comparing this value to previously measured values, it can be detected if the battery capacity has degraded significantly since the last test(s).

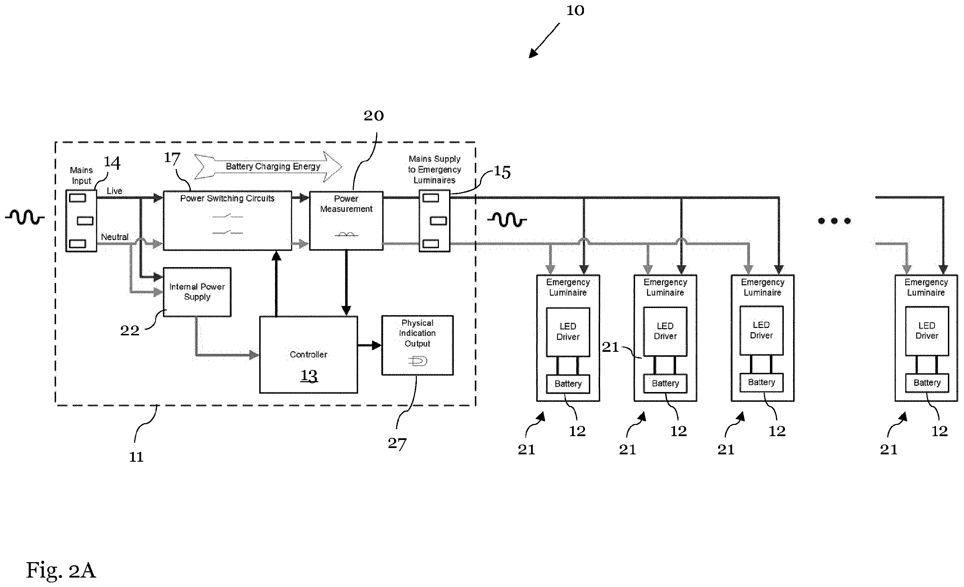

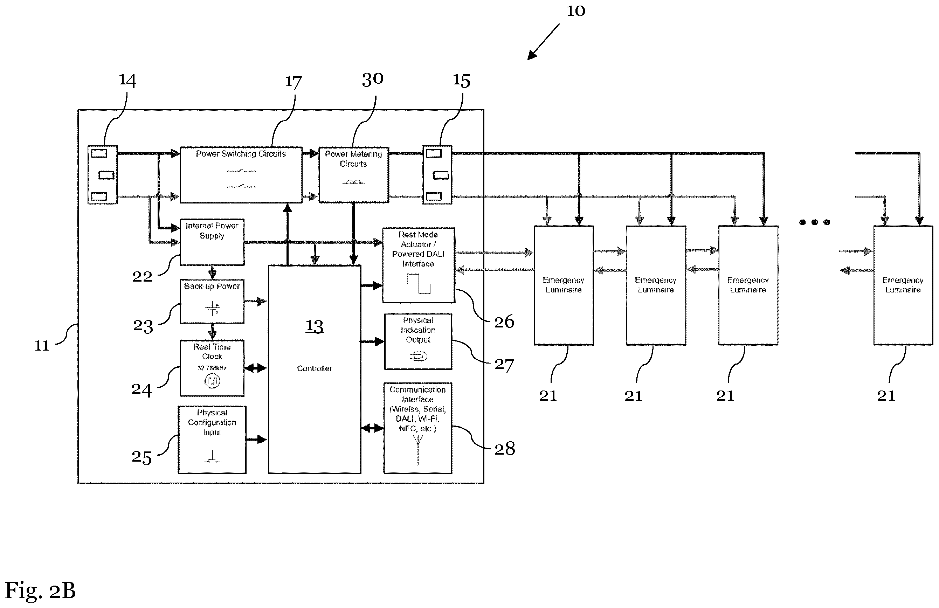

Fig. 1 only shows one luminaire 21 connected to the supply switching circuit 17. However, the supply switching circuit 17 can connect a plurality of emergency luminaires 21 to the supply line 20a (as e.g. shown in Figs. 2A and 2B). In case of a plurality of emergency luminaires 21, all or some of the emergency luminaires 21 can be equipped with a respective battery 12. In this case, the batteries 12 are preferably not measured individually; rather, all batteries are discharged in parallel during the testing and the energy required to charge all batteries 12 is measured by the measurement unit and compared to at least one stored value. If it is detected that this value has degraded, the luminaires 21 respectively their batteries 12 could be checked individually.

As the battery capacity reduces with aging, so is the amount of energy required to recharge the batteries 12 in the system. By fully discharging the batteries 12 by forcing a long emergency event during the test, followed by fully charging of the batteries 12, the total amount of energy required to charge the batteries can be determined.

By comparing consecutive measurements, it is possible to determine how the overall battery capacity has degraded. A trigger threshold can be set to issue the warning to a maintenance responsible user, in case the capacity has degraded beyond a certain point. For instance, this avoids the need to manually conduct a full duration test that can last as long as 3 h and visually inspect each luminaire 21 individually.

For instance, the threshold value used in the comparison can be dependent on which stored value the measured value is compared to. For instance, the measured amount of energy can be compared to the value of the immediate foregoing measurement and/or to the measured value of the first measurement after installation of the battery. The threshold value can be a differential threshold value.

The controller 13 can be configured to control the system 10 to perform the emergency lighting test(s). The controller 13 can further be configured to compare the measured value to the stored values after each emergency lighting test. For instance, the controller 13 is a microprocessor or ASIC.

The emergency lighting system 10 can be configured to perform the emergency lighting tests in regular time intervals, e.g. every X weeks or months. For instance, an emergency lighting test is carried out every 6 months or every 12 months.

The electrical supply line 20a can be a mains supply line. The supply switching circuit can be configured to forward the mains voltage form the mains supply line to the luminaires 21. The supply line 20a could also be a DC bus line.

The emergency luminaires 21 can comprise LED luminaires, e.g. in the form of emergency lighting and/or escape route luminaires. The emergency luminaires 21 can further comprise an internal driver.

As shown in Fig. 1, the system 10 can comprise input terminals 14 arranged for electrically connecting to the electrical supply line 20a; and output terminals 15 arranged for connecting the at least one emergency luminaire. The supply switching circuit 17 can be switched between the input terminals 14 and the output terminals 15.

The supply switching circuit 17 can be a switching unit configured to selectively connect and disconnect the input terminals 14 to the output terminals 15. For instance, when switched ON, the switching circuit 17 electrically connects the luminaire 21 to the supply line 20a, such that the luminaire 21 can be powered from the supply line 20a and the battery can be charged from the supply line 20a if needed.

The measurement unit 20 can be electrically connected to the electrical supply line 20a and configured to measure the amount of electrical energy which is supplied to the battery 12 of the at least one emergency luminaire 21 during charging (e.g., during the charging phase of the emergency lighting test).

The measurement unit 20 could be connected between the supply switching circuit 17 and the output terminals 15, as shown in Fig. 1, or between the output terminals 15 and the luminaires 21.

For instance, the measurement unit 20 can monitor the energy consumption during the charging of the batteries 12 of the one or more emergency luminaires 21 simultaneously.

The measurement unit 20 can comprise a voltage and/or current sensor configured to measure an electrical power value. In addition or alternatively, the measurement unit 20 can be configured to measure the time required to charge one or more batteries 12. This charging time can correlate with the amount of energy supplied to the batteries 12 and could thus be used as a measure for their overall capacity.

The system 10 can further comprise a memory 18. For instance, the memory 18 can be a flash memory. The memory 18 can be a component of the controller 13 or can be communicatively connected to the controller 13.

The measurement unit 20 can be configured to store the measured amount of electrical energy in the memory 18 after each emergency lighting test.

In summary, each time the emergency lighting test is performed by the system 10, the test can be continued until the batteries 12 of the luminaires 21 are completely depleted. Out of this completely depleted state of the batteries 12, the batteries 12 can then fully be charged, e.g. via a battery charger typically integrated in luminaires 21. Thereby, the amount of electrical energy supplied to the batteries until they are in a fully charged state is measured by the measurement unit 20.

This measurement value can be stored in the memory 18, and for each subsequent emergency lighting testing a comparison of the actual value of the energy amount supplied to the batteries for recharging is compared to one or more of the previous values. In case this comparison leads to a reduction larger than the prescribed threshold value, the emergency lighting system can determine that there is a substantial degradation of the status of at least one battery and can feed back an information (e.g., a warning signal) to a user. The user can then check the individual luminaires or batteries.

This feedback can be for example via a display or diode, over a bus, or by any other communication means, visual or acoustic or electronic, able to supply this information to a user or to a central control unit.

Figs. 2A and 2B show exemplary embodiments of the emergency lighting system 10, which build on the system 10 shown in Fig. 1. Same elements are labelled with the same reference signs. Hereinafter, only the differences between Fig. 1 and Figs. 2A-B are explained.

In the exemplary embodiment shown in Fig. 2A, the emergency lighting system 10 supplies a plurality of emergency luminaires 21. Each of the emergency luminaires 21 can be connected to the output terminals 15 and comprise a respective battery 12 and LED driver.

For example, the system 10 can comprise a frontend device 11, wherein the components of the system 10, in particular the controller 13, the supply switching circuit 17, the measurement unit 20 and the ports 14, 15, can be arranged in or on a housing of this fronted device 11.

The emergency lighting system 10 can further comprise a physical indication output, e.g. in the form of a display unit and/or an optical element 27.

The controller 13 can be configured to control the display unit and/or the optical element 27 to display a warning message and/or a warning light if it detects that the difference between the measured amount and the at least one stored value exceeds the threshold value.

For instance, the optical element 27 can comprise a light indicator for waring and status indication.

The physical indication output can further comprise an acoustic signaling device. The controller 13 can be configured to control the acoustic signaling device to play a warning sound if it detects that the difference between the measured amount and the stored value exceeds the threshold value.

The switching unit 17 can comprise power switching circuits capable of connecting or disconnecting the flow of power between the input 14 and the output terminals 15 of the device, e.g. via solid state or electromechanical relay switches.

The measurement unit 30 can comprises power metering circuits configured to measures the energy flowing from the input 14 to the output 15 of the frontend device 11 and further towards the luminaires 21.

Optionally, the system 10 can further comprise an internal power supply unit 22 which provides low voltage power to the controller 13 and remaining circuits of the unit 11,

In the exemplary embodiment shown in Fig. 2B, the system 10 comprises further elements, such as a communication interface 28.

The communication interface 28 can comprise a DALI interface, a serial interface, a Bluetooth interface, a Wi-Fi interface, an NFC interface, a Thread interface, a Matter interface, and/or a cellular network interface.

Via the communication interface 28, a user can set configuration and receive feedback information from the system 10 including measurements, statistics data, statuses, faults detections, energy data, etc. The communication interface 28 can be configured to forward this information in digital form.

For instance, a user may access the system 10 via a computer or mobile app. The system 10 can support P2P communications and Mesh communication.

The controller 13 can further be configured to forward a warning message via the communication interface 28 if it detects that the difference between the measured amount and the stored value exceeds the threshold value.

The warning message can be forwarded to a user device which is communicatively connected to the interface 28 and/or the same communication network as the interface 28. For instance, in case of a cellular network interface, the message could be an SMS.

Optionally, the system 10 can further comprise a back-up power supply unit 23, which is a means of proving power to the controller 13 or real time clock to store critical data. The back-up power supply unit 23 can comprise a battery, a supercapacitor, or a lithium capacitor.

Further optionally, the system 10 can comprise a real time clock 24 which can be external or internal to a controller real time clock block, and/or a physical configuration input 25, e.g. a physical button (mechanical, electrical or electromechanical) to provide configuration information to the controller 13.

In an example, the frontend device 11 is a rest mode controller. As such, it can comprise a dedicated rest mode actuator and/or powered DALI interface unit 26. This unit 26 can receive a control signal from the controller 13 and provides an electrical signal to the emergency luminaires 21 (e.g., positive or negative pulse of adjustable amplitude) according to the rest mode interface specification. Alternatively or additionally, the unit 13 can serve as a DALI interface with capability to power the DALI bus from its internal power supply.

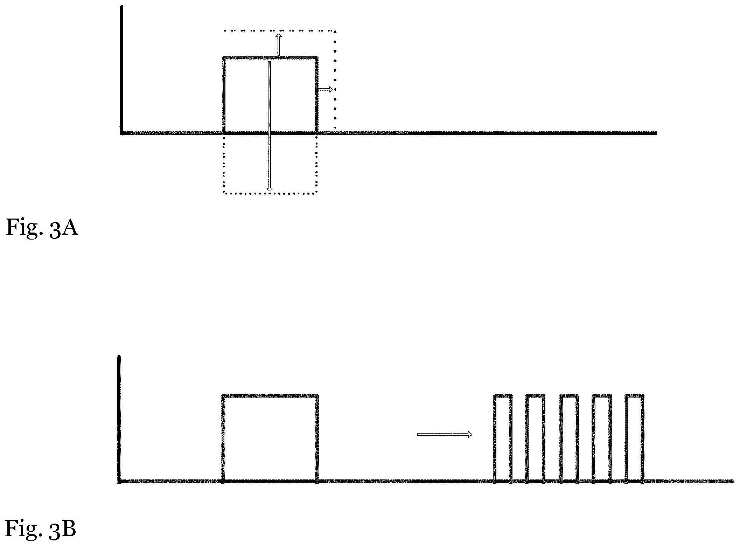

Figs. 3A and 3B show exemplary rest mode signals forwarded by the unit 26 when operating as rest mode actuator.

On user input or automatic scheduling, the frontend device 11 can generate such voltage signals according to a rest mode interface specification. These signals can be interpreted by the emergency luminaires 21 as rest or re-light commands. The rest mode signal can be configurable in amplitude, polarity and/or duration, e.g. to meet different converters specifications.

For instance, Fig. 3A shows a possible adaption of the rest mode signal, which is a single square pulse whose amplitude and/or temporal length is adapted as indicated by the arrows. Fig. 3B shows a further possible adaption of the square pulse signal which is converted to a plurality of square pulses of shorter duration.

When operating as a DALI interface, the unit 26 can provide power to the DALI bus. The frontend device 11 can also be able to turn off its internal DALI power supply and operate the DALI interface 26 from an external DALI power supply. However, the frontend device 11 power can be provided via the internal power supply 22 and/or powered from AC mains.

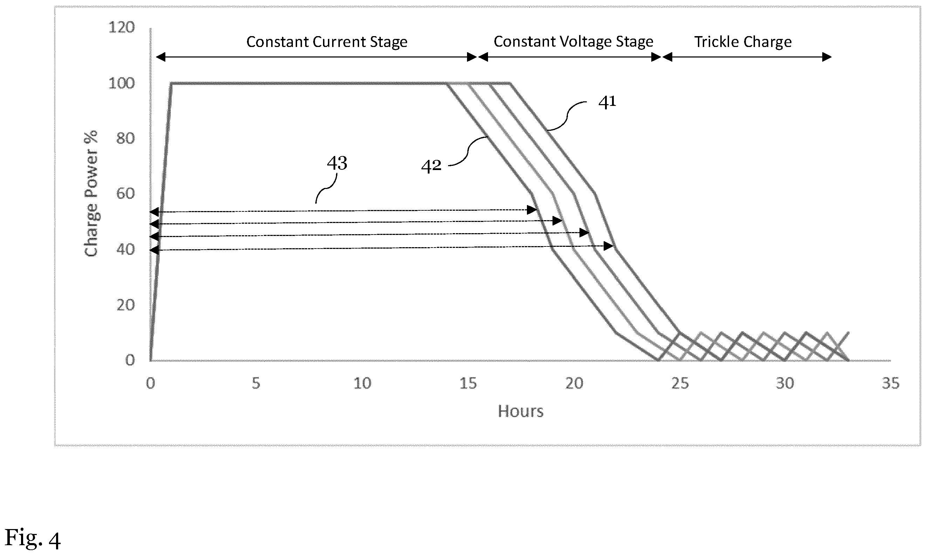

Fig. 4 shows exemplary charging curves of the battery 12 of the emergency lighting system 10 according to an embodiment. For instance, these charging curves are recorded in four consecutive emergency lighting tests.

For example, during each emergency lighting test, supply switching circuit 17 disconnects the normal power supply (e.g., mains supply) from the emergency luminaires 21 forcing them to operate from their battery 12. This battery supply is maintained for a period of time, which is typically much longer than the rated emergency duration, guaranteeing that all batteries of all luminaires 21 are fully discharged. Subsequently, the system 10 recharges the batteries 12 and the measurement unit 30 measures the total energy supplied to the batteries 12 during the recharge process. For instance, the measurement unit 30 can monitor the power consumed over time, as shown by the charging curves in Fig. 4.

The charging curves in Fig. 4 illustrate how the energy required to recharge the batteries 12 decreases as the capacity of the batteries reduces with time and usage. The rightmost line 41 (in the constant voltage stage) illustrates the highest battery capacity and the subsequent lines illustrate falling battery capacities, with the leftmost line 42 representing the lowest battery capacity. The arrows 43 indicate how the time to recharge can be measured and translated into a drop of energy required to recharge the batteries 12.

The system 10 can be configured to keep in memory 18 the results of consecutive measurements of the energy required to recharge the battery 12. The user can thus track the depletion of the batteries 12 and can be warned in case, the capacity drops by more than the threshold value compared to a previous measurement. This algorithm can be based on the principle that as the battery energy storage capacity diminishes, so does the energy required to recharge the batteries. This reduction of the capacity can also be detected by monitoring the time required to recharge the batteries, as this (charging) time correlates to the amount of energy supplied to the battery during charging. The system 10 can be calibrated for a more accurate detection.

For instance, as a side effect of the above algorithm, energy metered data can be provided by system 10 and can be displayed to a user via the communication interface 28. The measurement unit 30 can introduce low losses and minimize failure risk by adopting measurement mechanisms like current transformers or hall-effect sensors.

The system can comprise a plurality of emergency luminaires 21, each luminaire 21 equipped with at least one respective battery 12. These batteries 12 can be discharged and subsequently charged simultaneously during each emergency lighting test. In this case, the above technique could be used to identify if and by how much the total capacitance of the batteries has declined. If the total capacitance has declined by more than a threshold value, a user can check the individual batteries and luminaires to identify batteries which are strongly degraded.

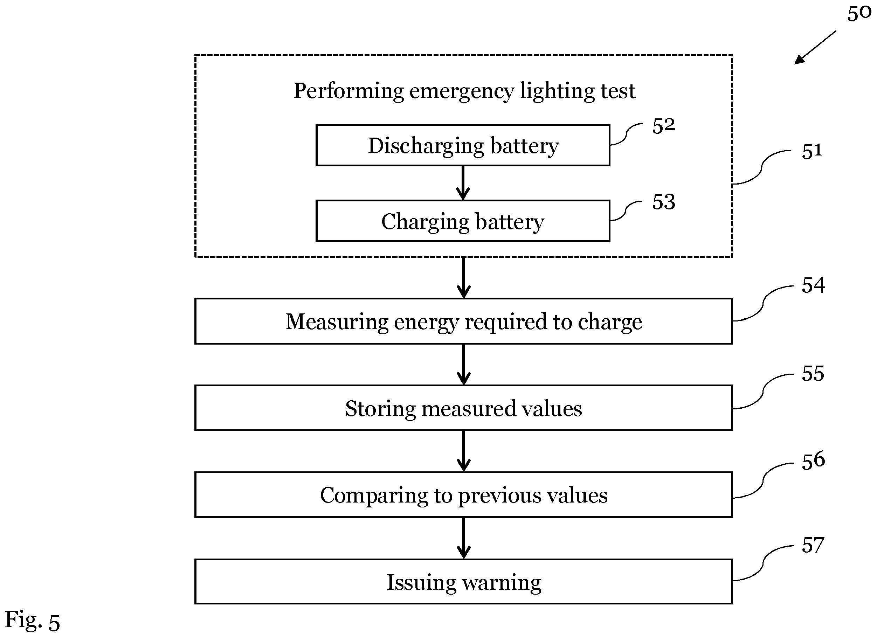

Fig. 5 shows a flow diagram of a battery 12 of at least one emergency luminaire 21 according to an embodiment. The method 50 can be executed by the emergency lighting system 10, as shown in any one of Figs. 1, 2A and 2B.

The method 50 comprises the steps of: periodically performing 51 the emergency lighting test, during which: the at least one emergency luminaire 21 is disconnected from the electrical supply line 20a and powered from its battery 12 until the battery 12 is fully discharged 52, and the at least one emergency luminaire 21 is subsequently connected to the electrical supply line 20a to fully (re)charge 53 its battery 12 from the electrical supply line 20a; measuring 54 an amount of electrical energy required to fully charge the battery 12 of the at least one emergency luminaire 21 during the emergency lighting test; comparing 56 the measured amount of electrical energy to at least one stored value of the amount of electrical energy measured during at least one previous emergency lighting test; and issuing 57 a warning if the difference between the measured amount and the stored value exceeds a threshold value.

Hereby, monitoring the health of the battery 12 may refer to the comparison 56 of the measured with the stored value(s) after each test, as this comparison allows to draw conclusions about a drop of capacity of the batteries. If the drop of supplied energy (correlating to the capacity) exceeds the threshold value (e.g., a differential threshold), it can be concluded that the battery health has decline by a significant amount, which could require further actions by a user, such as replacing the battery 12.

For instance, the method 50 comprises the further step of storing 55 the measured amount of electrical energy in the memory 18 after each emergency lighting test.

The step of issuing 57 the warning can comprise: displaying a warning message and/or a warning light if the difference between the measured amount and the stored value exceeds the threshold value.

In addition or alternatively, the step of issuing 57 the warning can comprise: playing a warning sound if the difference between the measured amount and the stored value exceeds the threshold value, and/or forwarding a warning message via the communication interface 28 if the difference between the measured amount and the stored value exceeds the threshold value.

Although the invention has been illustrated and described with respect to one or more implementations, equivalent alternations and modifications will occur to those skilled in the art upon the reading of the understanding of the specification and the annexed drawings. In addition, while a particular feature of the invention may have been disclosed with respect to only of the several implementations, such features may be combined with one or more other features of the other implementations as may be desired and advantage for any given or particular application.

## Claims

1. An emergency lighting system (10), comprising:
at least one emergency luminaire (21) which is equipped with a battery (12); and
a supply switching circuit (17) which is arranged to electrically connect the at least one emergency luminaire (21) to an electrical supply line (20a);
wherein the emergency lighting system (10) is configured to periodically perform an emergency lighting test, during which the supply switching circuit is configured to:
- disconnect the at least one emergency luminaire (21) from the electrical supply line (20a) to power the emergency luminaire from its battery (12) until the battery (12) is fully discharged, and
- subsequently connect the at least one emergency luminaire to the electrical supply line (20a) to fully charge its battery (12) from the electrical supply line (20a);
wherein the emergency lighting system (10) further comprises:
a measurement unit (20) configured to measure an amount of electrical energy required to fully charge the battery (12) of the at least one emergency luminaire (21) during the emergency lighting test; and
a controller (13) configured to compare the measured amount of electrical energy to at least one stored value of the amount of electrical energy measured during at least one previous emergency lighting test;
wherein the controller (13) is configured to issue a warning if the difference between the measured amount and the stored value exceeds a threshold value.

2. The emergency lighting system (10) of claim 1,
wherein the battery (12) is an internal battery of the at least one emergency luminaire (21).

3. The emergency lighting system (10) of claim 2, further comprising:
input terminals (14) arranged for electrically connecting to the electrical supply line (20a); and
output terminals (15) arranged for electrically connecting the at least one emergency luminaire (21);
wherein the supply switching circuit (17) is switched between the input and the output terminals (14, 15).

4. The emergency lighting system (10) of any one of the preceding claims,
wherein the measurement unit (20) is electrically connected to the electrical supply line (20a) and is configured to measure the amount of electrical energy which is supplied to the battery of the at least one emergency luminaire (21) during charging.

5. The emergency lighting system (10) of any one of the preceding claims, comprising:
a memory (18) configured to store the measured amount of electrical energy after each emergency lighting test.

6. The emergency lighting system (10) of any one of the preceding claims, further comprising:
a display unit and/or an optical element (27) configured to display a warning message and/or a warning light if the difference between the measured amount and the stored value exceeds the threshold value.

7. The emergency lighting system (10) of any one of the preceding claims, further comprising:
an acoustic signaling device configured to play a warning sound if the difference between the measured amount and the stored value exceeds the threshold value.

8. The emergency lighting system (10) of any one of the preceding claims, further comprising:
a communication interface (28) configured to forward a warning message if the difference between the measured amount and the stored value exceeds the threshold value.

9. The emergency lighting system (10) of claim 8,
wherein the communication interface (28) comprises at least one of the following interfaces: a DALI interface, a serial interface, a Bluetooth interface, a Wi-Fi interface, an NFC interface, a Thread interface, and a cellular network interface.

10. A method (50) for monitoring a health of a battery (12) of at least one emergency luminaire (21), wherein the method (50) comprises:
periodically performing (51) an emergency lighting test, during which:
- the at least one emergency luminaire (21) is disconnected from an electrical supply line (20a) and powered from its battery (12) until the battery (12) is fully discharged, and
- the at least one emergency luminaire (21) is subsequently connected to the electrical supply line (20a) to fully charge its battery (12) from the electrical supply line (20a);
measuring (54) an amount of electrical energy required to fully charge the battery (12) of the at least one emergency luminaire (21) during the emergency lighting test;
comparing (56) the measured amount of electrical energy to at least one stored value of the amount of electrical energy measured during at least one previous emergency lighting test; and
issuing (57) a warning if the difference between the measured amount and the stored value exceeds a threshold value.

11. The method of claim 10, further comprising:
storing (55) the measured amount of electrical energy in a memory (18) after each emergency lighting test.

12. The method of claim 10 or 11,
wherein the step of issuing (57) the warning comprises displaying a warning message and/or a warning light if the difference between the measured amount and the stored value exceeds the threshold value.

13. The method of any one of claims 10 to 12,
wherein the step of issuing (57) the warning comprises playing a warning sound if the difference between the measured amount and the stored value exceeds the threshold value.

14. The method of any one of claims 10 to 13,
wherein the step of issuing the warning (57) comprises forwarding a warning message via a communication interface (28) if the difference between the measured amount and the stored value exceeds the threshold value.
